# FASCICULE DE BREVET EUROPEEN

(11) **EP 1 191 247 B1**
(45) Date de publication et mention de la délivrance du brevet: **27.04.2005**
(21) Numéro de dépôt: 01402401.2
(22) Date de dépôt: 19.09.2001
(51) Int. Cl.: F16F 1/04, F16F 1/12

(54) **Ressort hélicoidal, procédé de fabrication d'un tel ressort, et application à une suspension de véhicule automobile**
Schraubenfeder, Verfahren zur Herstellung einer solchen Feder und Anwendung zu einem Aufhängungssystem für ein Fahrzeug
Coil spring, method of manufacturing such a spring and application to a suspension of a motor vehicle

(30) Priorité: 22.09.2000 FR 0012102
(43) Date de publication de la demande: 27.03.2002
(73) Titulaire: Peugeot Citroen Automobiles SA, 92200 Neuilly sur Seine (FR)
(72) Inventeur: Mennesson, Dominique Marie Christophe, 94700 Maisons-Alfort (FR)
(74) Mandataire: Bentz, Jean-Paul

(56) Documents cités:
- EP-A- 0 631 919
- DE-A- 19 619 074
- US-A- 1 523 225
- US-A- 5 984 283
- PATENT ABSTRACTS OF JAPAN vol. 1998, no. 14, 31 décembre 1998 (1998-12-31) & JP 10 252793 A (MAEKAWA ICHIRO), 22 septembre 1998 (1998-09-22)

## Description

L'invention concerne, de façon générale, les ressorts hélicoïdaux, leur procédé de fabrication, et leurs applications.

Plus précisément, l'invention concerne, selon un premier de ses aspects, un ressort hélicoïdal comprenant un fil enroulé en hélice et présentant à l'une au moins des zones extrémité mutuellement opposées du fil, une surface d'appui plane par laquelle un effort de sollicitation est sélectivement transmis à ce ressort.

Généralement, et en particulier pour les ressorts de suspension pour amortisseur de véhicule automobile, les sièges de l'amortisseur, sur lesquels viennent prendre appui les extrémités du ressort, sont pourvus d'un logement dans lequel s'insère une spire d'extrémité correspondante du ressort, de manière à faciliter la transmission au ressort des efforts de compression ou de détente.

Bien que relativement efficace, cette technique tend à augmenter de façon non négligeable la complexité de l'assemblage dans la mesure où, au cours de cette opération, le ressort et le siège doivent être parfaitement alignés.

En outre, selon cette technique, la réalisation des sièges est délicate, dans la mesure où ils adoptent une forme asymétrique complémentaire de celle des extrémités du ressort.

On a par ailleurs tenté de pallier ces inconvénients en dotant le ressort de surfaces d'extrémité planes réalisées par meulage ou usinage.

Cette technique, par exemple illustrée dans les documents de brevet US 1 523 225, EP 0631 919, et DE 196 19 074, n'est cependant pas acceptable dans la mesure où elle est relativement coûteuse et où elle affaiblit le ressort.

Le but de l'invention est de pallier les inconvénients de l'état de la technique.

A cette fin, le ressort de l'invention, par ailleurs conforme à la définition générique qu'en donne le préambule ci-dessus, est essentiellement caractérisé en ce que le fil enroulé est un fil tubulaire et en ce que la surface d'appui plane est formée par écrasement du fil.

On augmente ainsi la surface d'appui par laquelle passent les efforts subis ou exercés par le ressort tout en conservant, en coupe transversale, une section suffisante de fil.

Selon un mode de réalisation préféré de l'invention, le fil enroulé, avantageusement réalisé en métal, présente avant écrasement une section externe constante et éventuellement même des sections externes et internes constantes et circulaires.

Dans les applications privilégiées du ressort de l'invention, la zone d'écrasement de ce ressort, ou chaque zone d'écrasement, peut être constituée par une spire d'extrémité de ce ressort.

Un tel ressort est en particulier bien adapté à la réalisation d'une suspension de véhicule automobile.

L'invention a également pour objet un procédé de fabrication d'un ressort hélicoïdal tel que défini ci-dessus, caractérisé en ce qu'il comporte les étapes consistant à :
- enrouler un fil en hélice ;
- chauffer au moins l'une des zones d'extrémité libre du fil ;
- appliquer sur la ou chaque zone d'extrémité chauffée un effort d'écrasement de manière à former une surface d'appui plane par laquelle un effort de sollicitation est transmis au ressort ;
- refroidir le ressort ; et
- relâcher l'effort d'écrasement.

Avantageusement, le ressort étant réalisé en métal, l'étape de chauffage consiste à chauffer la ou chaque zone d'extrémité du ressort par chauffage par induction électrique.

On peut réaliser l'étape de refroidissement par projection d'un liquide de refroidissement sur le ressort.

D'autres caractéristiques et avantages de l'invention ressortiront de la description suivante, donnée uniquement à titre d'exemple, et faite en référence aux dessins annexés sur lesquels :
- la figure 1 est une vue en coupe longitudinale d'un ressort hélicoïdal d'un amortisseur de véhicule automobile selon l'état de la technique ; et
- la figure 2 est une vue en coupe longitudinale d'un ressort hélicoïdal d'un amortisseur de véhicule automobile selon l'invention.

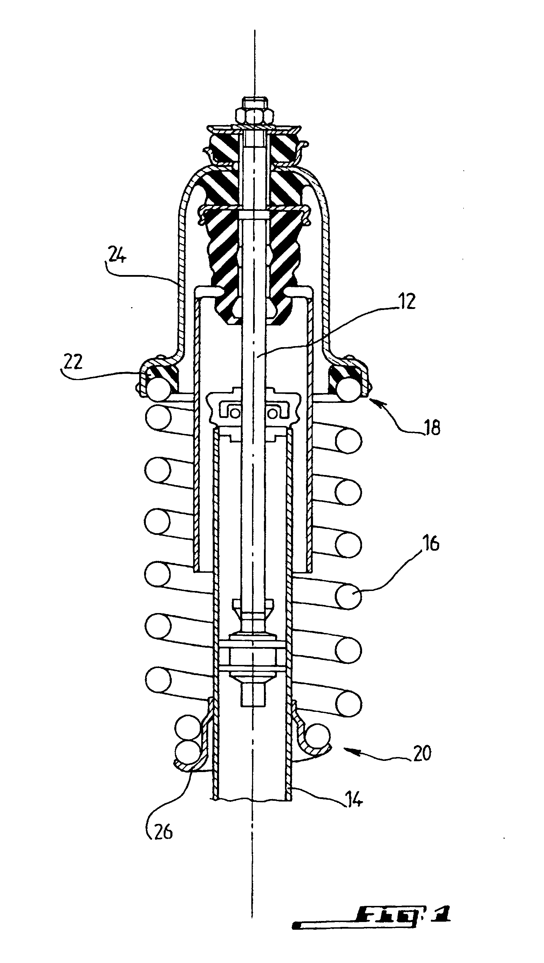

Sur la figure 1, on a représenté une vue en coupe longitudinale d'un amortisseur de véhicule automobile selon l'état de la technique, désigné par la référence numérique générale 10.

Comme cela est classique, l'amortisseur 10 comporte une tige 12 d'amortisseur montée axialement déplaçable dans un corps 14. La tige 12 et le corps 14 sont l'un monté sur la masse suspendue du véhicule automobile, telle que la masse du châssis du véhicule et, l'autre, monté sur la masse non suspendue du véhicule, telle que la masse du support de fusée de roue.

L'amortisseur 12 est en outre pourvu d'un ressort de suspension 16 dont les extrémités 18 et 20 mutuellement opposées sont en appui sur des sièges.

Ainsi, par exemple, l'une des extrémités 18 du ressort 16 est en appui contre un siège 22 en élastomère porté par une jupe 24 solidaire du châssis du véhicule, l'extrémité opposée 20 venant en appui sur un siège 26 porté par le corps 14.

Les sièges 22 et 26 sont conformés de manière à augmenter la surface de contact avec le ressort 16 en vue d'améliorer le transfert des efforts de sollicitation vers le ressort de suspension.

Comme exposé précédemment, ce type d'amortisseur présente un certain nombre d'inconvénients, notamment en raison du fait que la réalisation des butées est relativement complexe et que l'assemblage de l'ensemble est délicat à réaliser.

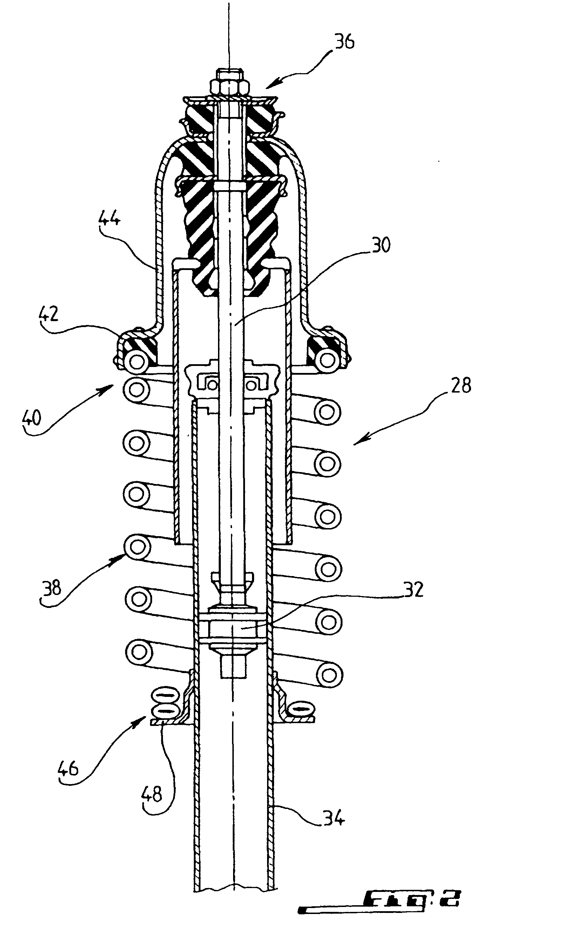

On a représenté sur la figure 2, en position supposée verticale, un amortisseur de véhicule automobile doté d'un ressort de suspension selon l'invention, permettant de pallier ces inconvénients.

L'amortisseur visible sur cette figure, désigné par la référence numérique générale 28, est également doté d'une tige de piston 30 dont une première extrémité 32 est montée axialement déplaçable dans un corps d'amortisseur 34 et dont une deuxième extrémité 36 est par exemple fixée sur la masse suspendue du véhicule automobile, telle que la masse du châssis. Le corps 34 est, quant à lui, fixé sur la masse non suspendue du véhicule (non représentée).

L'amortisseur 28 est par ailleurs pourvu d'un ressort de suspension 38 hélicoïdal, constitué d'un fil enroulé en hélice, et dont une première extrémité 40, constituant l'extrémité supérieure, est en appui sur une butée 42 portée par une jupe 44 solidaire de la deuxième extrémité 36 de la tige de piston 30.

La deuxième extrémité 46 du ressort 38, constituant l'extrémité inférieure, vient en appui sur une butée 48 portée par le corps 34 de l'amortisseur.

L'une au moins des extrémités 40 et 46 du ressort 38 délimite une surface d'appui plane par laquelle les efforts de sollicitation sont transmis au ressort.

Selon l'invention, comme le montre la figure 2, le ressort 38 est réalisé à partir d'un fil tubulaire enroulé en hélice et dont au moins une extrémité est conformée, par écrasement, pour offrir la surface d'appui plane requise.

Dans l'exemple de réalisation visible sur la figure 2, seule l'une des extrémités du ressort, à savoir la deuxième extrémité du ressort, est écrasée. On notera cependant qu'il est également possible d'aplanir ainsi les deux extrémités mutuellement opposées du ressort 38.

De préférence, le ressort 38 est réalisé en un métal approprié pour l'utilisation envisagée.

Avant écrasement, le fil tubulaire présente avantageusement des sections externe et interne constantes sur toute la longueur du fil, circulaires et concentriques.

Pour réaliser un tel ressort de suspension, il convient simplement d'enrouler un fil en hélice, de chauffer la ou les extrémités du ressort que l'on souhaite aplanir jusqu'à une température suffisante pour autoriser une déformation subséquente, et d'écraser cette extrémité jusqu'à l'obtention de la forme désirée.

On refroidit ensuite le ressort de manière à rendre la déformation irréversible.

Par exemple, l'écrasement s'effectue en compressant le ressort entre des plateaux mobiles jusqu'à ce que toutes les spires viennent en contact et que la ou les spires d'extrémité soient écrasées. Par ailleurs, on réalise de préférence le refroidissement du ressort par projection d'un liquide de refroidissement approprié.

Dans le cas où le ressort est réalisé en métal, le chauffage du ressort peut s'effectuer par une technique de chauffage par induction électrique, de type classique.

Enfin, de préférence, l'écrasement d'une zone d'extrémité du ressort consiste à n'écraser que la spire d'extrémité correspondante.

On conçoit que l'invention qui vient d'être décrite, selon laquelle on ménage une surface d'appui plane sur au moins l'une des zones d'extrémité d'un ressort procure les avantages suivants :
- réduction du coût du fait de la facilité de mise en forme des extrémités du ressort ;
- réduction de la masse du ressort pour une même rigidité, par suppression de matière qui travaille peu ou pas ; et
- augmentation de la fréquence propre pour une même rigidité.

## Revendications

1. Ressort hélicoïdal comprenant un fil enroulé en hélice et présentant, à l'une au moins des zones d'extrémité (40, 46) mutuellement opposées du fil, une surface d'appui plane par laquelle un effort de sollicitation est transmis au ressort, **caractérisé en ce que** le fil enroulé est constitué par un fil tubulaire, et **en ce que** la surface d'appui plane est formée par écrasement du fil.

2. Ressort suivant la revendication 1, **caractérisé en ce que** le fil enroulé présente, avant écrasement, une section externe constante.

3. Ressort suivant les revendications 1 et 2, **caractérisé en ce que** le fil enroulé présente, avant écrasement, des sections externe et interne circulaires et constantes.

4. Ressort selon l'une quelconque des revendications précédentes, **caractérisé en ce que** le fil tubulaire est réalisé en métal.

5. Ressort selon l'une quelconque des revendications précédentes, **caractérisé en ce que** la ou chaque zone écrasée (40, 46) du ressort est constituée par une spire d'extrémité du ressort.

6. Procédé de fabrication d'un ressort hélicoïdal (38) selon l'une quelconque des revendications précédentes, **caractérisé en ce qu'**il comporte les étapes consistant à :
- enrouler un fil tubulaire en hélice ;
- chauffer au moins l'une des zones d'extrémité libre (40, 46) du fil ;
- appliquer sur la ou chaque zone d'extrémité (40, 46) chauffée un effort d'écrasement de manière à former une surface d'appui plane par laquelle un effort de sollicitation est transmis au ressort (38) ;
- refroidir le ressort (38) ; et
- relâcher l'effort d'écrasement.

7. Procédé selon la revendication 6, **caractérisé en ce que** le ressort étant réalisé en métal, l'étape de chauffage consiste à chauffer la ou chaque zone d'extrémité (40, 46) du ressort par chauffage par induction électrique.

8. Procédé selon l'une quelconque des revendications 6 et 7, **caractérisé en ce que** l'étape de refroidissement consiste à projeter un liquide de refroidissement sur le ressort (38).

9. Application d'un ressort suivant l'une quelconque des revendications 1 à 5 à une suspension de véhicule automobile.

## Claims

1. Coil spring comprising a wire coiled into a helix with a flat supporting surface on at least one of the mutually opposite end areas (40, 46) of the wire, through which stress is transferred to the spring, **characterised by** the fact that the coiled wire is made of tubular wire and that the flat supporting surface is formed by crushing the wire.

2. Spring according to claim 1, **characterised by** the fact that before crushing the coiled wire has a constant external section.

3. Spring according to claims 1 and 2, **characterised by** the fact that before crushing the coiled wire has constant circular internal and external sections.

4. Spring according to any one of the previous claims, **characterised by** the fact that the tubular wire is made of metal.

5. Spring according to any one of the previous claims, **characterised by** the fact that the or each crushed area (40, 46) of the spring is made of an end spiral of the spring.

6. Method of manufacturing a coil spring (38) according to any one of the previous claims, **characterised by** the fact that it comprises stages consisting of:
- coiling a tubular wire into a helix;
- heating at least one of the free end areas (40, 46) of the wire;
- applying a crushing force to the or each heated end area (40, 46) so as to form a flat supporting surface, through which stress is transferred to the spring (38);
- cooling the spring (38); and
- releasing the crushing force.

7. Method according to claim 6, **characterised by** the fact that, the spring being made of metal, the heating stage consists of heating the or each end area (40, 46) of the spring by heating by electric induction.

8. Method according any one of claims 6 and 7, **characterised by** the fact that the cooling stage consists of projecting a cooling liquid onto the spring (38).

9. Application of a spring according to any one of claims 1 to 5 to a motor vehicle suspension.

## Patentansprüche

1. Schraubenfeder mit einem wendelartig aufgewickelten Draht, der an zumindest einem der einander entgegengesetzten Endbereiche (40, 46) des Drahts eine ebene Abstützfläche aufweist, über die eine Beaufschlagungskraft auf die Feder übertragen wird, **dadurch gekennzeichnet, dass** der aufgewickelte Draht aus einem rohrförmigen Draht besteht und dass die ebene Abstützfläche durch Quetschen des Drahts gebildet wird.

2. Feder nach Anspruch 1, **dadurch gekennzeichnet, dass** der aufgewickelte Draht vor dem Quetschen einen konstanten Außenquerschnitt aufweist.

3. Feder nach Anspruch 1 und 2, **dadurch gekennzeichnet, dass** der aufgewickelte Draht vor dem Quetschen einen kreisförmigen und konstanten Außen- und Innenquerschnitt aufweist.

4. Feder nach einem der vorangehenden Ansprüche, **dadurch gekennzeichnet, dass** der rohrförmige Draht aus Metall hergestellt ist.

5. Feder nach einem der vorangehenden Ansprüche, **dadurch gekennzeichnet, dass** der bzw. jeder gequetschte Bereich (40, 46) der Feder aus einer Endwindung der Feder besteht.

6. Verfahren zum Herstellen einer Schraubenfeder (38) nach einem der vorangehenden Ansprüche, **dadurch gekennzeichnet, dass** es folgende Schritte umfasst:
- wendelartiges Aufwickeln eines rohrförmigen Drahtes,
- Erhitzen zumindest eines der freien Endbereiche (40, 46) des Drahtes,
- Aufbringen einer Quetschkraft auf den bzw. jeden erhitzen Endbereich (40, 46), so dass eine ebene Abstützfläche gebildet wird, über die eine Beaufschlagungskraft auf die Feder (38) übertragen wird,
- Abkühlen der Feder (38), und
- Aufheben der Quetschkraft.

7. Verfahren nach Anspruch 6, **dadurch gekennzeichnet, dass** bei der aus Metall hergestellten Feder der Schritt zum Erhitzen darin besteht, den bzw. jeden Endbereich (40, 46) der Feder durch elektrische Induktionserwärmung zu erhitzen.

8. Verfahren nach einem der Ansprüche 6 und 7, **dadurch gekennzeichnet, dass** der Schritt des Abkühlens darin besteht, eine Kühlflüssigkeit auf die Feder (38) zu spritzen.

9. Anwendung einer Feder nach einem der Ansprüche 1 bis 5 bei einer Radaufhängung eines Kraftfahrzeugs.
